# EUROPEAN PATENT SPECIFICATION

(11) **EP 2 530 680 B1**
(45) Date of publication and mention of the grant of the patent: **10.05.2017**
(21) Application number: 11734814.4
(22) Date of filing: 25.01.2011
(51) Int. Cl.: G21C 19/07

(54) **NUCLEAR FUEL STORAGE RACK CONNECTION STRUCTURE AND CONNECTION METHOD THEREOF**
VERBINDUNGSSTRUKTUR FÜR EIN REGAL ZUR LAGERUNG VON NUKLEARABFÄLLEN UND VERBINDUNGSVERFAHREN DAFÜR
STRUCTURE DE LIAISON POUR CASIERS DE STOCKAGE DE COMBUSTIBLE NUCLÉAIRE ET PROCÉDÉ DE LIAISON DE CELLE-CI

(30) Priority: 25.01.2010 JP 2010013255
(43) Date of publication of application: 05.12.2012
(73) Proprietor: Mitsubishi Heavy Industries, Ltd., Tokyo 108-8215 (JP)
(72) Inventor: IWASAKI Akihisa, Tokyo 108-8215 (JP); MORITA Hideyuki, Tokyo 108-8215 (JP); NEKOMOTO Yoshitsugu, Tokyo 108-8215 (JP); HIROTA Kazuo, Tokyo 108-8215 (JP); OKUNO Daisaku, Tokyo 108-8215 (JP); NAKAMURA Masaaki, Tokyo 108-8215 (JP)
(74) Representative: Hoffmann Eitle
(86) International application number: PCT/JP2011/051338
(87) International publication number: WO 2011/090208

(56) References cited:
- JP-A- 8 334 596
- JP-A- 63 128 293
- JP-A- H08 334 596
- JP-A- 2009 109 302
- JP-A- 2009 109 302
- US-A- 4 088 897
- US-B1- 6 343 107

## Description

### [Technical Field]

The present disclosure relates to a structure for connecting nuclear fuel storage racks which are stored underwater inside a storage pit in nuclear fuel storage facilities, with nuclear fuel assemblies being accommodated, and also relates to a method for connecting the nuclear fuel storage racks.

The application concerned is to claim the right of priority to Japanese Patent Application No. 2010-013255 filed on January 25, 2010, in Japan, with the content cited herewith.

### [Background Art]

Spent nuclear fuels (spent nuclear fuel rods) generated, for example, in a nuclear power plant are stored and retained in nuclear fuel storage facilities. Further, the spent nuclear fuels are accommodated in vertical cells of fuel storage racks in a state of being housed as nuclear fuel assemblies in square tubes and stored inside a storage pit in the nuclear fuel storage facilities. At this time, water is pooled inside the storage pit and the nuclear fuel storage racks (nuclear fuel assemblies) including the nuclear fuel assemblies are stored underwater, by which decay heat is cooled and removed so that the decay heat is below the critical state and nuclear radiation is blocked off.

Further, conventionally, a nuclear fuel storage rack is fixed on a side wall of a storage pit by way of a support and stored in a state of being supported by the support and the storage pit. However, where the nuclear fuel storage rack is firmly fixed to the storage pit as described above, there is a fear that the support will be increased in loads at the time of a large earthquake.

For this reason, there has been proposed and put into a practice a storage method in which a nuclear fuel storage rack is not fixed to a side wall or a base plate of a storage pit (for example, refer to Japanese Published Unexamined Patent Application No. S63-128294). In this type of nuclear fuel storage facility, the nuclear fuel storage rack is placed on the bottom (base plate) of the storage pit so as to slide relatively (a sliding mechanism is provided to attain relative sliding), by which horizontal force generated in the event of an earthquake is absorbed by sliding of the nuclear fuel storage rack, in addition to attenuation effects resulting from a fluid such as water.

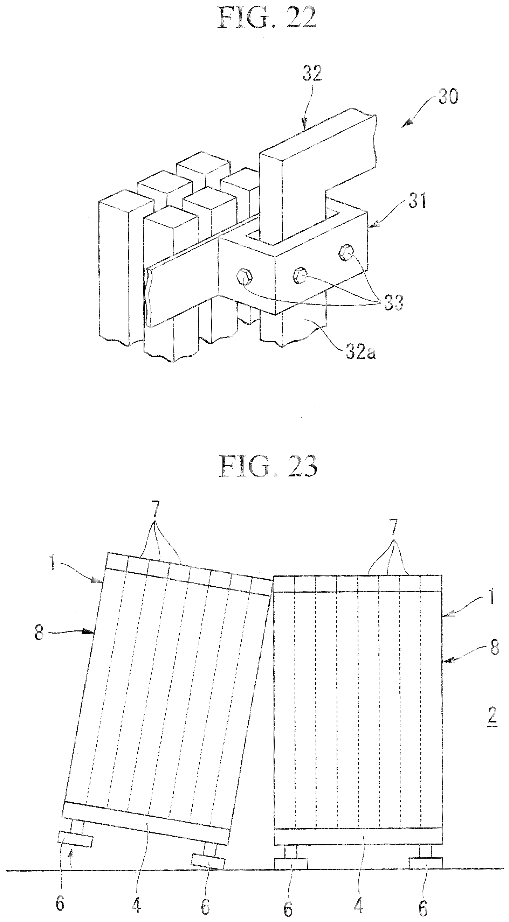

However, as described, where the nuclear fuel storage rack is constituted so as to slide at the time of an earthquake, that is, where a self-sustaining nuclear fuel storage rack is adopted, as shown in FIG. 23, in the event of a large earthquake, each of nuclear fuel storage racks 1 stored inside a storage pit 2 undergoes rocking or the plurality of nuclear fuel storage racks 1 stored inside the storage pit 2 are individually subjected to sliding. Thus, there is a fear that mutually adjacent nuclear fuel storage racks 1 will collide with each other inside the storage pit 2. Further, since the nuclear fuel storage racks 1 undergo rocking, there is a fear that the nuclear fuel storage racks 1 will collide against side walls and the bottom of the storage pit 2.

On the other hand, Japanese Published Unexamined Patent Application No. H8-334596 has disclosed a method in which a connecting plate is joined by using pins to connect mutually adjacent nuclear fuel storage racks. Other examples can be seen in documents JP H08 334596 A, JP 2009 109302 A and US 4 088 894.

The closest prior art is represented by US 4 088 897 A and discloses a nuclear fuel storage rack connection structure according to the preamble of claim 1.

### [Summary of the disclosure]

### [Problem to be Solved by the disclosure]

When used nuclear fuels are stored inside a storage pit, nuclear fuel storage racks are suspended inside the storage pit to store the nuclear fuel storage racks in the order corresponding to accommodation of the nuclear fuel assemblies. Further, at this time, the plurality of nuclear fuel storage racks are stored sequentially inside the storage pit. Also, a new nuclear fuel storage rack is stored so as to be arrayed and arranged beside a nuclear fuel storage rack which has been stored in advance inside the storage pit.

Then, in the method disclosed in Patent Document 2 in which the connecting plate is joined by using pins to connect nuclear fuel storage racks, at a stage that a new nuclear fuel storage rack is suspended beside a nuclear fuel storage rack which has been stored in advance, an operator is required to join the connecting plate by using pins. Thus, there is a fear that an equivalent absorbed radiation dose to the operator will increase. Therefore, it has been desired to develop a method for preventing the rocking of nuclear fuel storage racks or collision of the nuclear fuel storage racks in the event of a large earthquake by connecting the nuclear fuel storage racks more simply and more efficiently.

In view of the above situation, an object of the present disclosure is to provide a nuclear fuel storage rack connection structure capable of connecting simply and efficiently nuclear fuel storage racks which are stored underwater inside a storage pit and also to provide a nuclear fuel storage rack connection method. This object is solved by a nuclear fuel storage rack connection structure with the features of claim 1 and a method for connecting a plurality of nuclear fuel storage racks according to claim 6. Preferred embodiments follow from the dependent claims.

### [Means for Solving the Problem]

The nuclear fuel storage rack connection structure of the present invention is a nuclear fuel storage rack connection as defined in claim 1, while the corresponding method for connecting a plurality of nuclear fuel storage racks is defined in claim 6.

In the present invention, it is possible to obtain effects by the above-described nuclear fuel storage rack connection structure.

### [Effects of the Invention]

According to the nuclear fuel storage rack connection structure and the nuclear fuel storage rack connection method of the present invention, another nuclear fuel storage rack is suspended so as to be arrayed and arranged beside a nuclear fuel storage rack which has been stored in advance inside the storage pit, and the engagement member is inserted into and engaged with the engagement receiving portion in the vertical direction. It is, therefore, possible to connect mutually adjacent nuclear fuel storage racks.

Thereby, it is possible to prevent each of the nuclear fuel storage racks stored inside the storage pit from the rocking and the nuclear fuel storage racks stored inside the storage pit from sliding due to their individual responses in the event of a large earthquake. It is also possible to reliably prevent the collision of mutually adjacent nuclear fuel storage racks inside the storage pit. Further, collision of the nuclear fuel storage racks against side walls and the bottom of the storage pit can be reliably prevented by preventing the nuclear fuel storage racks from rocking.

Further, a new nuclear fuel storage rack is suspended beside a nuclear fuel storage rack which has been stored in advance, and also the engagement member is engaged with the engagement receiving portion in the vertical direction, by which mutually adjacent nuclear fuel storage racks can be connected. Therefore, the necessity for conventional troublesome work of joining a connecting plate by using pins is eliminated. The engagement member is only engaged with the engagement receiving portion in the vertical direction, thus making it possible to connect mutually adjacent nuclear fuel storage racks. Thereby, it is possible to simply and efficiently connect the nuclear fuel storage racks with each other and also suppress an equivalent absorbed radiation dose to an operator who is involved in work for connecting the nuclear fuel storage racks.

### [Brief Description of Drawings]

FIG. 1 is a drawing which shows a storage pit in nuclear fuel storage facilities which stores nuclear fuel storage racks.
FIG. 2 is a drawing which shows a nuclear fuel storage rack.
FIG. 3 is a drawing which shows a nuclear fuel storage rack.
FIG. 4 is a drawing which shows a state that mutually adjacent nuclear fuel storage racks are connected by a nuclear fuel storage rack connection structure of a first example in the present disclosure.
FIG. 5 is a drawing which shows the nuclear fuel storage rack connection structure of the first example in the present disclosure.
FIG. 6 covers cross sectional views as viewed in the direction of the line X1-X1 in FIG. 5.
FIG. 7 is a drawing which shows a nuclear fuel storage rack connection method of the first example in the present disclosure. This drawing shows a state that the nuclear fuel storage rack is suspended and lowered (suspended and raised).
FIG. 8 is a drawing which shows a modified example of the nuclear fuel storage rack connection structure of the first example in the present disclosure.
FIG. 9 is a drawing which shows a nuclear fuel storage rack connection structure of a second example in the present disclosure.
FIG. 10 is a drawing which shows a modified example of the nuclear fuel storage rack connection structure of the second example in the present disclosure.
FIG. 11 is a drawing which shows a modified example of the nuclear fuel storage rack connection structure of the second example in the present disclosure.
FIG. 12 is a drawing which shows a nuclear fuel storage rack connection structure of a third example in the present disclosure, being part of the claimed invention.
FIG. 13 is a drawing which shows a nuclear fuel storage rack connection method of the third example in the present disclosure. This drawing shows a state that engagement leg portions of an engagement member are inserted into and engaged with engagement holes of an engagement receiving portion in FIG. 12.
FIG. 14 is a drawing which shows the engagement receiving portion of the nuclear fuel storage rack connection structure of the third example in the present disclosure.
FIG. 15 is a drawing which shows a modified example of the nuclear fuel storage rack connection structure of the third example in the present disclosure.
FIG. 16 is a drawing which shows a method for connecting nuclear fuel storage racks by using the nuclear fuel storage rack connection structure given in FIG. 15. This drawing shows a state that engagement leg portions of the engagement member are inserted into and engaged with engagement holes of the engagement receiving portion.
FIG. 17 is a drawing which shows an example where the engagement member is divided into four portions in FIG. 16.
FIG. 18 is a drawing which shows the engagement receiving portion of the nuclear fuel storage rack connection structure given in FIG. 15.
FIG. 19 is a drawing which shows a modified example of the nuclear fuel storage rack connection structure of the third example in the present disclosure.
FIG. 20 is a drawing which shows a method for connecting nuclear fuel storage racks by the nuclear fuel storage rack connection structure given in FIG. 19. This drawing shows a state in which engagement leg portions of the engagement member are inserted into and engaged with engagement holes of the engagement receiving portion.
FIG. 21 is a drawing which shows the engagement receiving portion of the nuclear fuel storage rack connection structure given in FIG. 19.
FIG. 22 is a drawing which shows a modified example of the nuclear fuel storage rack connection structure of the third example in the present disclosure.
FIG. 23 is a drawing which shows a state that conventional nuclear fuel storage racks undergo rocking and mutually adjacent nuclear fuel storage racks collide with each other.

### [Mode for Carrying Out the Disclosure]

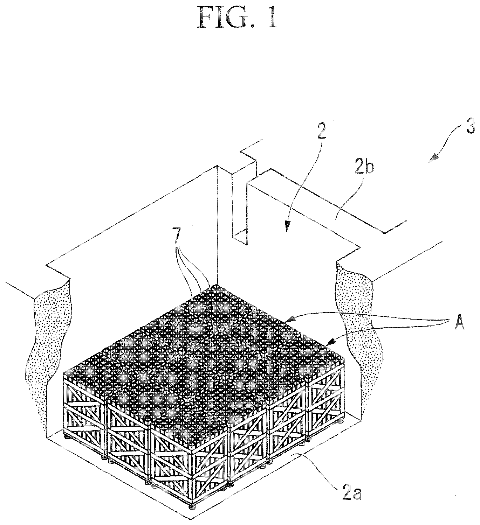

Hereinafter, a description will be given of the nuclear fuel storage rack connection structure and the nuclear fuel storage rack connection method of the first example with reference to FIGS. 1 to 7. The present example relates to a nuclear fuel storage rack connection structure which stores and retains used nuclear fuels generated, for example, in a nuclear power plant underwater inside a storage pit in nuclear fuel storage facilities and a nuclear fuel storage rack connection method.

As shown in FIG. 1, the nuclear fuel storage facilities 3 of the present example are provided with a storage pit 2 in which water is pooled to store, underwater, nuclear fuel storage racks A for accommodating used nuclear fuels as nuclear fuel assemblies. Further, inside the storage pit 2, the plurality of nuclear fuel storage racks A are stored so as to be arrayed and arranged on a bottom 2a of the storage pit 2.

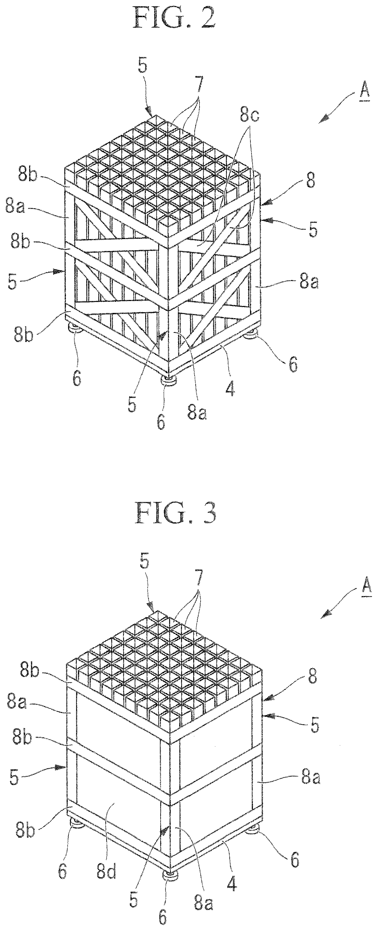

Further, the nuclear fuel storage rack A for accommodating the nuclear fuel assemblies is of a self-sustaining type and formed into a square box shape as with a conventional nuclear fuel storage rack. As shown in FIGS. 1 and 2, the nuclear fuel storage rack A is provided with a base plate 4, a plurality of supporting leg portions 6 which are projected downward, with upper ends continuing to the base plate 4, and installed on a lower face of the base plate 4 and a cell accommodating portion 8 which is installed above the base plate 4 to house and keep a plurality of vertical cells (rack cells) 7. Still further, the cell accommodating portion 8 is erected, with a lower end thereof continuing to the base plate 4. The cell accommodating portion 8 is provided with four columns 8a which are installed on four corners 5 of the base plate 4, cross members (beams) 8b which are installed in a hanging manner by connecting upper ends, intermediate portions and lower ends between mutually adjacent columns 8a, and diagonal members (stays) 8c which are installed within a plane enclosed with the columns 8a and the cross members 8b. As shown in FIG. 3, the nuclear fuel storage rack A may be provided with an outer circumferential plate 8d within a plane enclosed with the columns 8a and the cross members 8b.

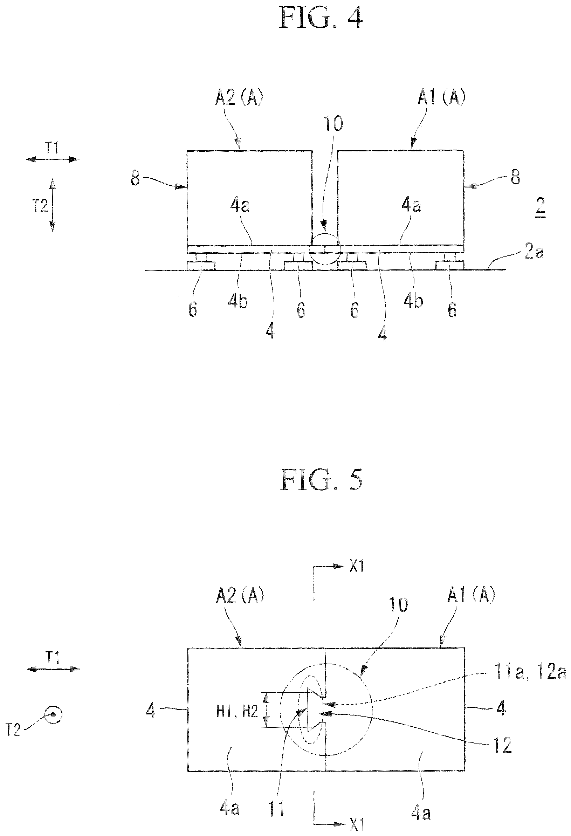

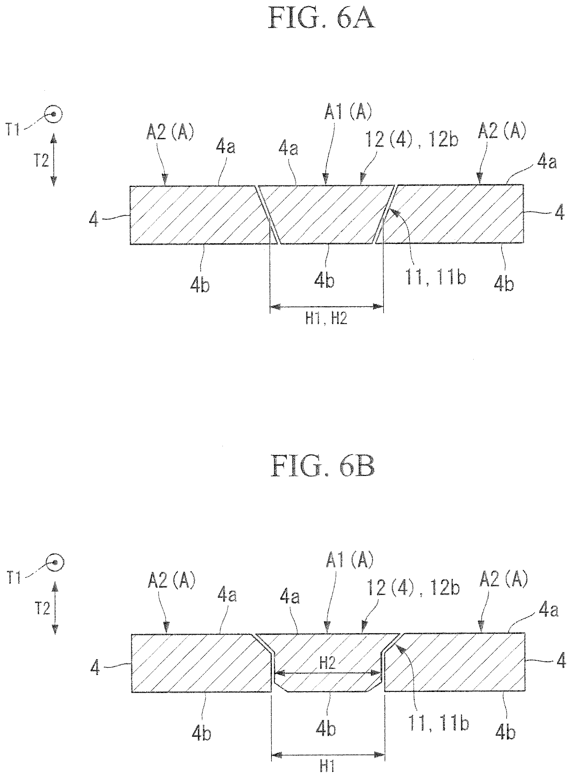

On the other hand, as shown in FIGS. 4 to 6, a connection structure 10 is installed at outer circumferences of the base plates 4 in the nuclear fuel storage racks A (A1, A2) of the present example (on outer circumferences of the nuclear fuel storage racks A (A1, A2)). Also, as shown in FIGS. 5 and 6, the nuclear fuel storage rack connection structure 10 is provided with an engagement receiving portion 11 and an engagement member 12 which is engaged with the engagement receiving portion 11. In the present example, the engagement member 12 is installed on the base plate 4 of the first nuclear fuel storage rack A1 which is adjacent in a state in which a plurality of nuclear fuel storage racks A are arrayed and arranged underwater inside the storage pit 2, and the engagement receiving portion 11 is installed on the base plate 4 of the second nuclear fuel storage rack A2.

The engagement receiving portion 11 is an engagement hole and formed in such a manner as to be recessed from the outer circumference of the base plate 4 to an inside of the base plate 4 and also penetrate from an upper face 4a of the base plate 4 to a lower face 4b thereof. That is, the engagement hole of the engagement receiving portion 11 is formed so as to be open on the outer circumference of the base plate 4 and also open above and below (on the upper face 4a and the lower face 4b). Further, the engagement hole of the engagement receiving portion 11 is provided with a lock receiving portion 11a which is gradually increased in width H1 from the outer circumference of the base plate 4 to the inside (from outside of the nuclear fuel storage rack A1 to inside of the nuclear fuel storage A1 in the lateral direction T1). As shown in FIG. 6, a taper receiving portion 11b is also provided which is gradually decreased in width H1 from the upper face 4a of the base plate 4 to the lower face 4b (from above to below).

On the other hand, as shown in FIGS. 5 and 6, the engagement member 12 is formed so as to be the same in shape and size as the engagement hole of the engagement receiving portion 11 and projected outside in the lateral direction T1, with one end thereof fixed to the outer circumference of the base plate 4. That is, the engagement member 12 of the present example is provided with a lock portion 12a which is integrally formed with the first nuclear fuel storage rack A1 and gradually increased in width H2 from the outer circumference of the base plate 4 to the leading end thereof. Further, the engagement member 12 is provided with a taper portion 12b which is gradually decreased in width H2 from the upper face 4a to the lower face 4b (from above to below). The taper portion 12b is formed so as to be engaged with the taper receiving portion 11b of the engagement receiving portion 11.

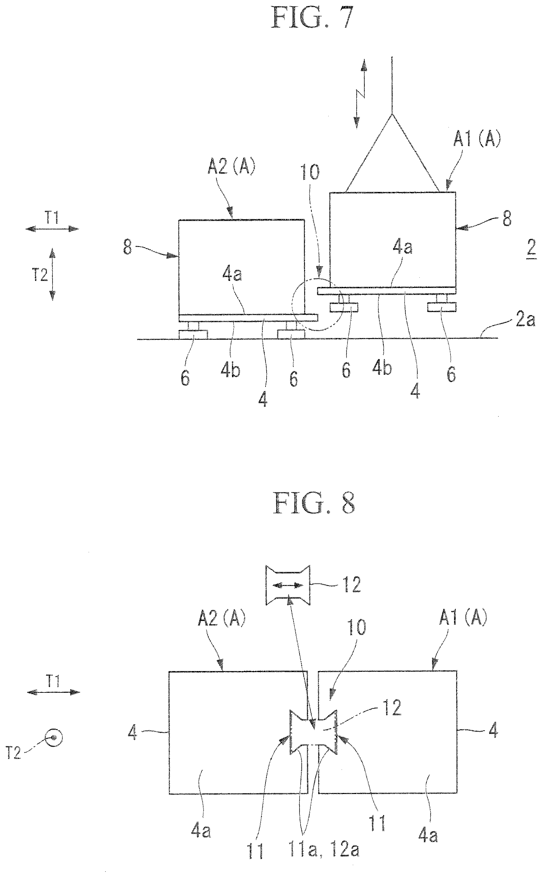

Then, where the mutually adjacent nuclear fuel storage racks A (A1, A2) are connected by using the above-constituted nuclear fuel storage rack connection structure 10 of the present example (in the nuclear fuel storage rack connection method of the present example), as shown in FIG. 7, a new nuclear fuel storage rack (a first nuclear fuel storage rack, another nuclear fuel storage rack) A1 is suspended so as to be arrayed and arranged beside a nuclear fuel storage rack (a second nuclear fuel storage rack) A2 which has been stored in advance inside the storage pit 2. At this time, the first nuclear fuel storage rack A1 is suspended so as to be arrayed and arranged and (at the same time), as shown in FIGS. 4 and 5, the engagement member 12 of the first nuclear fuel storage rack A1 is inserted into and engaged with the engagement receiving portion 11 of the second nuclear fuel storage rack A2 from above (in the vertical direction T2). Thereby, the engagement member 12 engaged with the engagement receiving portion 11 is used to connect the mutually adjacent nuclear fuel storage racks A1, A2. That is, the puzzle-structured connection structure 10 in which the engagement member 12 is inserted into and engaged with the engagement hole of the engagement receiving portion 11 is installed on the nuclear fuel storage racks A1, A2, by which the mutually adjacent nuclear fuel storage racks A1, A2 are connected. Nuclear fuel assemblies are stored underwater inside the storage pit 2, by which temperature elevation of the water will thermally elongate the engagement member 12 to firmly connect the mutually adjacent nuclear fuel storage racks A1, A2.

Then, as described above, the nuclear fuel storage rack A1 is suspended so as to be arrayed and arranged and, at the same time, the mutually adjacent nuclear fuel storage racks A1, A2 are connected. Thereby, the necessity for the conventional troublesome work of joining a connecting plate by using pins is eliminated. The engagement member 12 is only engaged with the engagement receiving portion 11 in the vertical direction T2 (the nuclear fuel storage rack A1 is only suspended and lowered), by which the nuclear fuel storage racks A1, A2 can be connected simply and efficiently. Therefore, it is possible to suppress an increase in equivalent absorbed radiation dose to an operator who is involved in the work of connecting the nuclear fuel storage racks.

Further, at this time, the engagement receiving portion 11 is provided with the taper receiving portion 11b in which the width H1 thereof gradually decreases from the upper face 4a of the base plate 4 to the lower face 4b thereof, and the engagement member 12 is provided with the taper portion 12b. Thus, the nuclear fuel storage rack A1 is suspended so as to be arrayed and arranged and, at the same time, the engagement member 12 is easily engaged with the engagement receiving portion 11. Thereby, the nuclear fuel storage racks A1, A2 can be connected more simply and efficiently.

Then, the engagement member 12 is engaged with the engagement receiving portion 11 to connect the mutually adjacent nuclear fuel storage racks A1, A2. Therefore, it is possible to prevent each of the nuclear fuel storage racks A stored inside the storage pit 2 from rocking and also prevent the nuclear fuel storage racks A stored inside the storage pit 2 from sliding due to their individual responses in the event of a large earthquake. As a result, there is no chance that the mutually adjacent nuclear fuel storage racks A (A1, A2) will collide with each other inside the storage pit 2. Further, rocking of the nuclear fuel storage racks A (A1, A2) is prevented to exclude any chance that the nuclear fuel storage racks A collide against the side walls 2b of the storage pit 2 (refer to FIG. 1).

Still further, as described in the present example, the lock receiving portion 11a, which is gradually increased in width H1 from the outer circumference of the base plate 4 to the inside, is installed on the engagement receiving portion 11, and the lock portion 12b engaged with the lock receiving portion 11a and locked is installed on the engagement member 12. Therefore, the engagement member 12 is reliably engaged with the engagement receiving portion 11 and locked to firmly connect the mutually adjacent nuclear fuel storage racks A1, A2. As a result, it is possible to more reliably prevent rocking of the nuclear fuel storage racks A and sliding of the nuclear fuel storage racks A resulting from their individual responses.

Therefore, in the nuclear fuel storage rack connection structure 10 and the nuclear fuel storage rack connection method of the present example, another nuclear fuel storage rack A1 is suspended so as to be arrayed and arranged beside a nuclear fuel storage rack A2 which has been stored in advance inside the storage pit 2 and also the engagement member 12 is inserted into and engaged with the engagement receiving portion 11 in the vertical direction T2. Thereby, it is possible to connect the mutually adjacent nuclear fuel storage racks A1, A2.

Further, the engagement member is projected outside laterally with one end thereof being fixed to the outer circumference of the nuclear fuel storage rack, and has been already integrally formed into the nuclear fuel storage rack. Therefore, another nuclear fuel storage rack is suspended so as to be arrayed and arranged beside a nuclear fuel storage rack which has been stored in advance inside the storage pit and, at the same time, the engagement member is inserted into and engaged with the engagement receiving portion in the vertical direction, by which the mutually adjacent nuclear fuel storage racks can be connected. Still further, since the engagement receiving portion and the engagement member are simple in structure, existing nuclear fuel storage racks can be processed to easily provide the engagement receiving portion and the engagement member.

Thereby, it is possible to prevent each of the nuclear fuel storage racks A stored inside the storage pit 2 from rocking and the plurality of nuclear fuel storage racks A stored inside the storage pit 2 from sliding due to their individual responses in the event of a large earthquake. As a result, it is possible to reliably prevent collision of the mutually adjacent nuclear fuel storage racks A (A1, A2) inside the storage pit 2. Further, collision of the nuclear fuel storage racks A (A1, A2) against side walls and the bottom of the storage pit 2 can be reliably prevented by preventing the nuclear fuel storage racks A (A1, A2) from rocking.

Further, the necessity for conventional troublesome work of joining a connecting plate by using pins is eliminated, and the engagement member 12 is only engaged with the engagement receiving portion 11 in the vertical direction T2, thus making it possible to connect the mutually adjacent nuclear fuel storage racks A (A1, A2). Thereby, it is possible to simply and efficiently connect the nuclear fuel storage racks A (A1, A2) and also suppress an equivalent absorbed radiation dose to an operator involved in work for connecting the nuclear fuel storage racks.

Still further, the engagement hole of the engagement receiving portion 11 is provided with a lock receiving portion 11a in which the width H1 thereof gradually increases from an outside of the nuclear fuel storage rack A2 to an inside of the nuclear fuel storage rack A2 in the lateral direction T1 of the nuclear fuel storage rack A2, and the engagement member 12 is provided with a lock portion 12a which is engaged with the lock receiving portion 11a and locked. The lock receiving portion 11a is engaged with the lock portion 12a, by which the engagement receiving portion 11 is firmly joined with the engagement member 12. Thus, it is possible to firmly connect the mutually adjacent nuclear fuel storage racks A (A1, A2).

In addition, the engagement hole of the engagement receiving portion 11 is provided with a taper receiving portion 11b in which the width H1 thereof gradually decreases from the above of the base plate 4 to below of the base plate 4, and the engagement member 12 is provided with a taper portion 12b which is engaged with the taper receiving portion 11b. Thereby, the engagement member 12 can be easily inserted into and engaged with the engagement receiving portion 11 in the vertical direction T2.

If such a necessity arises, from a state that the nuclear fuel storage racks A (A1, A2) are kept connected, the nuclear fuel storage rack A1 is suspended and raised, by which the engagement member 12 can be easily disengaged from the engagement receiving portion 11. It is, thus, possible to easily disconnect the mutually adjacent nuclear fuel storage racks A (A1, A2).

A description has been so far given of the nuclear fuel storage rack connection structure and the nuclear fuel storage rack connection method of the first example.

The example may be modified. For example, the engagement receiving portion 11 is installed on the nuclear fuel storage rack A2 which has been stored in advance inside the storage pit 2, and the engagement member 12 is integrally formed on the nuclear fuel storage rack A1 which is newly suspended and stored inside the storage pit 2. It is also acceptable that the engagement member 12 is integrally formed on the nuclear fuel storage rack A2 which has been stored in advance, and the engagement receiving portion 11 is installed on the nuclear fuel storage rack A1 which is to be newly suspended.

Further, the engagement receiving portion 11 is engaged with the engagement member 12 to just connect the mutually adjacent nuclear fuel storage racks A1, A2. Therefore, both the engagement receiving portion 11 and the engagement member 12 are installed on each of the nuclear fuel storage racks A (A1, A2), by which each pair of the engagement receiving portion 11 and the engagement member 12 of the mutually adjacent nuclear fuel storage racks A1, A2 may be engaged and connected. Further, a plurality of engagement receiving portions 11 and/or engagement members 12 may be installed on each of the nuclear fuel storage racks A. It is noted that in FIG. 5, a description has been given only of the connection structure in the lateral direction in the drawing. However, the nuclear fuel storage racks A1, A2 are connected in the front-back direction (a direction orthogonal to the lateral direction) in a similar manner, thus making it possible to connect all the nuclear fuel storage racks A.

Still further, the nuclear fuel storage rack connection structure (and the nuclear fuel storage rack connection method) are, as a matter of course, applicable to a case where a plurality of nuclear fuel storage racks A are stored inside the storage pit 2 where no water is pooled, in addition to a case where a new nuclear fuel storage rack A1 is arrayed and arranged beside a nuclear fuel storage rack A2 which has been stored in advance underwater inside the storage pit 2.

Further, the engagement member 12 is projected outside in the lateral direction T1, with one end of the engagement member 12 being fixed to an outer circumference of the base plate 4. However, as shown in FIG. 8, it is also acceptable that the engagement receiving portion 11 is installed on each of the first nuclear fuel storage rack A1 and the second nuclear fuel storage rack A2, one end of the engagement member 12 is engaged with the engagement receiving portion 11 of the first nuclear fuel storage rack A1, while the other end thereof is engaged with the engagement receiving portion 11 of the second nuclear fuel storage rack A2 to attach the engagement member 12, by which the mutually adjacent nuclear fuel storage racks A1, A2 are connected. That is, it is acceptable that the engagement member 12 is attached by inserting the ends thereof into the engagement receiving portion 11 of each of the mutually adjacent nuclear fuel storage racks A1, A2 in the vertical direction T2 to make an engagement so as to hang across the mutually adjacent nuclear fuel storage racks A1, A2, by which the mutually adjacent nuclear fuel storage racks A1, A2 are connected. Then, in this instance as well, the lock receiving portion 11a, the lock portion 12a, the taper receiving portion 11b, and the taper portion 12b are installed on the engagement receiving portion 11 and the engagement member 12, thus making it possible to obtain effect similar to that of the present embodiment. Further, where the engagement member 12 is formed so as to expand and contract freely, it is possible to make an engagement with the engagement receiving portion 11 (connecting the mutually adjacent nuclear fuel storage racks A1, A2) more easily.

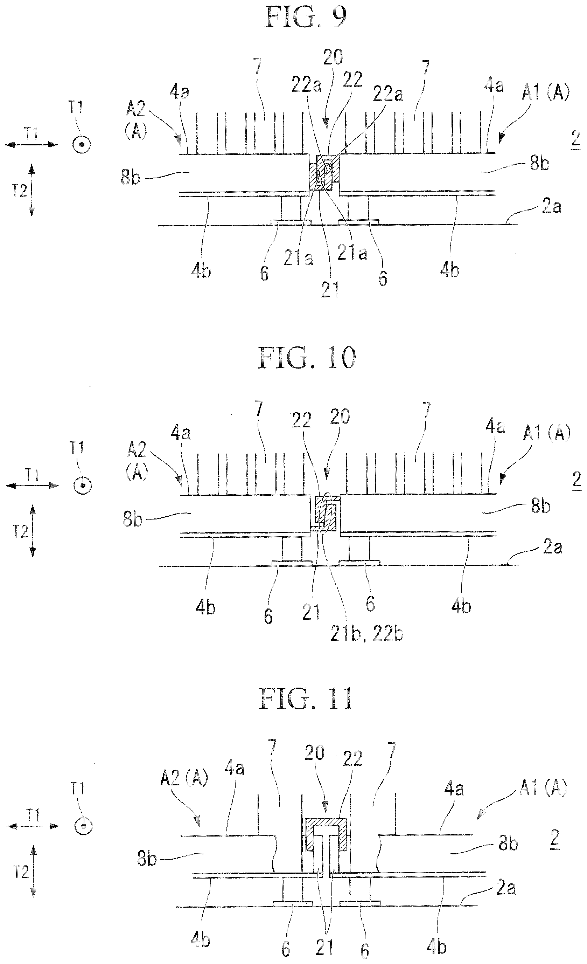

Next, a description will be given of a nuclear fuel storage rack connection structure and a nuclear fuel storage rack connection method of the second example with reference to FIG. 9. As with the first example, the present example relates to the nuclear fuel storage rack connection structure and the nuclear fuel storage rack connection method in which an engagement member is installed on a base plate of a first nuclear fuel storage rack of mutually adjacent nuclear fuel storage racks while an engagement receiving portion is installed on a base plate of a second nuclear fuel storage rack, and the engagement member is inserted into the engagement receiving portion to make an engagement, by which the mutually adjacent nuclear fuel storage racks are connected. Therefore, the same reference numerals are given to the same constitutions of the first example, with a detailed description omitted here.

As shown in FIG. 9, a nuclear fuel storage rack connection structure 20 of the present example is provided with an engagement receiving portion 21 and an engagement member 22, each of which is formed (constituted) with a member, the cross section of which is a U-letter shape. Then, the engagement receiving portion 21 is firmly installed on an outer circumference of a base plate 4 in such a manner that an engagement groove formed with a pair of left and right side wall portions 21a of the member, the cross section of which is a U-shaped, is arranged along the outer circumference of the base plate 4 (of the nuclear fuel storage rack A2) in the lateral direction T1. At this time, the engagement receiving portion 21 is firmly installed on the base plate 4 in such a manner that an opening portion is arranged above between end portions of the pair of left and right side wall portions 21a of the engagement groove.

On the other hand, the engagement member 22 is provided in such a manner that a first side wall portion 22a is firmly installed on the base plate 4 and an end portion of a second side wall portion 22a is installed below. That is, the engagement member 22 and the engagement receiving portion 21 are disposed so as to be upside down.

Then, where the above-constituted nuclear fuel storage rack connection structure 20 of the present example is used to connect the mutually adjacent nuclear fuel storage racks A1, A2, a new nuclear fuel storage rack (a first nuclear fuel storage rack or another nuclear fuel storage rack) A1 is suspended so as to be arrayed and arranged beside a nuclear fuel storage rack (a second nuclear fuel storage rack) A2 which has been stored in advance inside a storage pit 2. Further, the second side wall portion 22a of the engagement member 22 of the first nuclear fuel storage rack A1 is inserted into and engaged with the engagement groove on the engagement receiving portion 21 of the second nuclear fuel storage rack A2 from above (in the vertical direction T2). Thereby, the mutually adjacent nuclear fuel storage racks A1, A2 are connected by the engagement member 22 which is engaged with the engagement receiving portion 21. Further, in FIG. 1, the connection structure 20 is firmly installed in all directions to connect all the nuclear fuel storage racks A.

As described so far, the nuclear fuel storage rack A1 is suspended so as to be arrayed and arranged, and the mutually adjacent nuclear fuel storage racks A1, A2 are connected. Therefore, as with the first example, the necessity for the conventional troublesome work of joining a connecting plate by using pins is eliminated, and the engagement member 22 is only engaged with the engagement receiving portion 21 in the vertical direction T2 (in other words, the nuclear fuel storage rack A1 is only suspended and lowered), by which the nuclear fuel storage racks A1, A2 can be connected simply and efficiently. It is, therefore, possible to suppress an equivalent absorbed radiation dose to an operator involved in the work of connecting the nuclear fuel storage racks.

Further, the engagement member 22 is engaged with the engagement receiving portion 21 to connect the mutually adjacent nuclear fuel storage racks A1, A2. Therefore, it is possible to prevent each of the nuclear fuel storage racks A stored inside the storage pit 2 from rocking or the nuclear fuel storage racks A from sliding due to their individual responses in the event of a large earthquake. Thus, there is no chance that the mutually adjacent nuclear fuel storage racks A (A1, A2) will collide with each other inside the storage pit 2. Further, rocking of the nuclear fuel storage racks A (A1, A2) is prevented to exclude any chance that the nuclear fuel storage racks A will collide against the side walls 2b of the storage pit 2.

Therefore, in the nuclear fuel storage rack connection structure 20 and the nuclear fuel storage rack connection method of the present example, it is possible to obtain the effect similar to that of the first example.

Also, another nuclear fuel storage rack A1 is suspended so as to be arrayed and arranged beside a nuclear fuel storage rack A2 which has been stored in advance inside the storage pit 2, the engagement member 22 is inserted into and engaged with the engagement receiving portion 21 in the vertical direction T2, by which the mutually adjacent nuclear fuel storage racks A (A1, A2) can be connected.

It is, thereby, possible to prevent each of the nuclear fuel storage racks A stored inside the storage pit 2 from rocking and the plurality of nuclear fuel storage racks A stored inside the storage pit 2 from sliding due to their individual responses in the event of a large earthquake. It is also possible to reliably prevent collision of the mutually adjacent nuclear fuel storage racks A (A1, A2) inside the storage pit 2. Further, collision of the nuclear fuel storage racks A (A1, A2) against side walls and the bottom of the storage pit 2 can be reliably prevented by preventing the nuclear fuel storage racks A (A1, A2) from rocking.

Further, the necessity for the conventional troublesome work of joining a connecting plate by using pins is eliminated. Also, the engagement member 22 is only engaged with the engagement receiving portion 21 in the vertical direction T2, by which the mutually adjacent nuclear fuel storage racks A1, A2 can be connected. Thereby, the nuclear fuel storage racks A (A1, A2) can be simply and efficiently connected to suppress an equivalent absorbed radiation dose to an operator involved in work for connecting the nuclear fuel storage racks.

If such a necessity arises, from a state that the nuclear fuel storage racks A (A1, A2) are kept connected, the first nuclear fuel storage rack A1 is suspended and raised, by which the engagement member 22 can be easily disengaged from the engagement receiving portion 21. It is, thus, possible to easily disconnect the mutually adjacent nuclear fuel storage racks A (A1, A2).

A description has been so far given of the nuclear fuel storage rack connection structure and the nuclear fuel storage rack connection method of the second example. The example may be modified.

For example, as shown in FIG. 10, the engagement receiving portion 21 and the engagement member 22 may be formed with a member, the cross section of which is an L-shaped. Further, it is acceptable that a taper receiving portion 21b in which the width thereof gradually decreases from above to below (in the vertical direction T2) is provided to form an engagement groove of the engagement receiving portion 21, and a taper portion 22b engaged with the taper receiving portion 21b is provided to form the engagement member 22. According to the above-described constitution, as with the first example, the engagement member 22 can be easily inserted into and engaged with the engagement receiving portion 21 in the vertical direction T2.

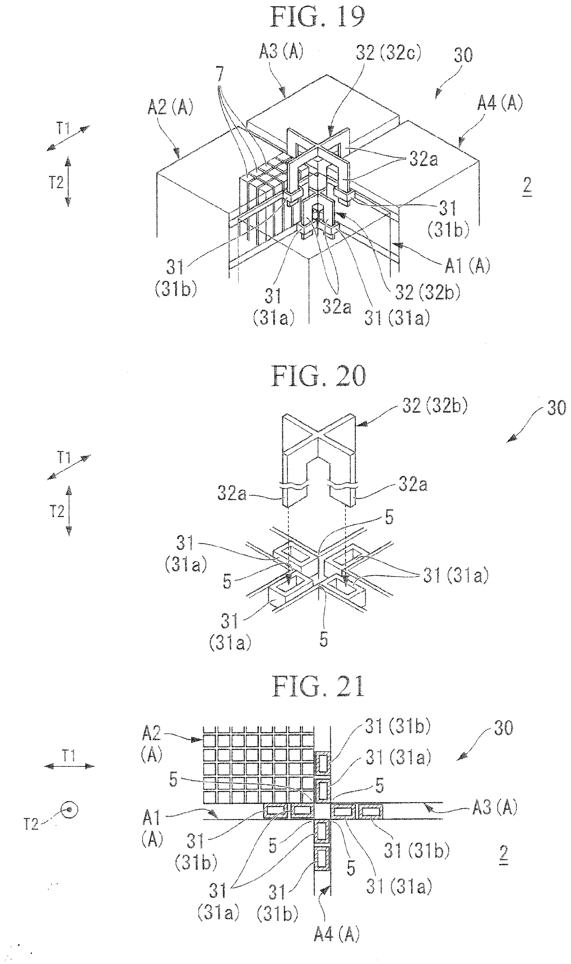

Further, as shown in FIG. 11, it is acceptable that the engagement receiving portion 21 is formed on each of the mutually adjacent nuclear fuel storage racks A1, A2 (on the base plate 4 of each of the nuclear fuel storage racks A1, A2) so as to extend outside along the outer circumferences which oppose each other, and the engagement member 22, the cross section of which is formed in a U-shaped, is inserted into and engaged with the engagement receiving portions 21 of the mutually adjacent nuclear fuel storage racks A1, A2 from above, by which the mutually adjacent nuclear fuel storage racks A (A1, A2) are connected. Although not illustrated, as with an engagement receiving portion 31 given in FIG. 20, an engagement hole may be formed on the engagement receiving portion 21 and the leading end of the engagement member 22 may be inserted into the engagement hole. In this case as well, it is possible to obtain the effects similar to those of the first and the second examples.

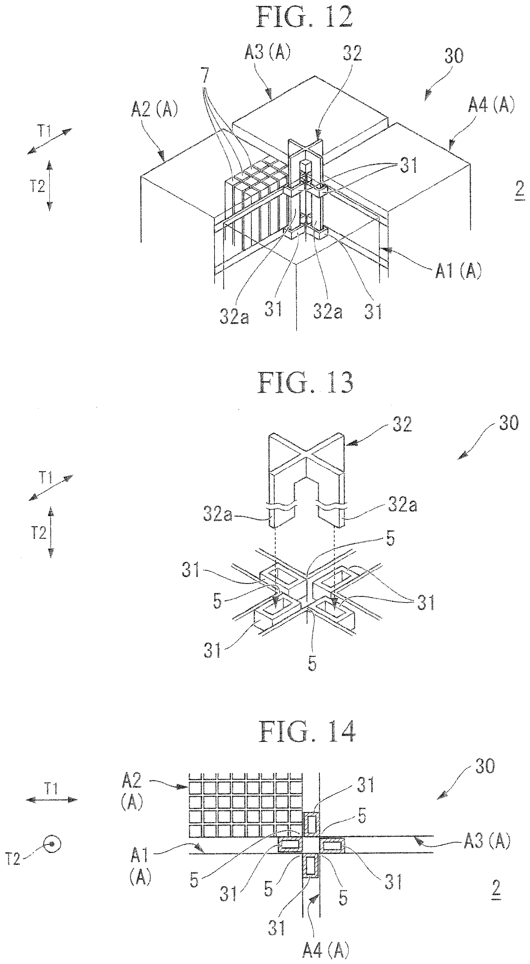

Next, a description will be given of a nuclear fuel storage rack connection structure and a nuclear fuel storage rack connection method of the third example, being part of the claimed invention, with reference to FIGS. 12 to 14. In the present example, the same reference numerals are given to the same constitutions of the first and the second examples, with a detailed description omitted here.

As shown in FIGS. 12 to 14, a nuclear fuel storage rack connection structure 30 of the present example is provided with an engagement receiving portion 31 which is formed with a member, the cross section of which is a square shape, or a member, the cross section of which is a U-shaped. Then, the engagement receiving portion 31 is firmly installed by continuing end portions of a pair of left and right side wall portions of the member, the cross section of which is the square shape, to an outer circumference of each of the nuclear fuel storage racks A (the base plate 4 as well as columns 8a and cross members 8b of the cell accommodating portion 8). At this time, the engagement receiving portion 31 is firmly installed in such a manner that an engagement hole is arranged in the vertical direction T2. Further, in the present embodiment, the above-described engagement receiving portions 31 are installed at a plurality of stages (two stages in the present embodiment) in the vertical direction T2 on each of the nuclear fuel storage racks A. And the engagement receiving portion 31 at an upper stage overlaps with that at a lower stage in the vertical direction T2.

On the other hand, the engagement member 32 is provided with four engagement leg portions 32a which extend downward, with the upper end thereof continuing integrally, and formed in a cross shape.

Then, where the above-constituted nuclear fuel storage rack connection structure 30 of the present example is used to connect the mutually adjacent nuclear fuel storage racks A, a new nuclear fuel storage rack A is suspended so as to be arrayed and arranged beside a nuclear fuel storage rack A which has been stored in advance inside the storage pit 2. Further, at this time, four nuclear fuel storage racks A (A1 to A4) are arrayed and arranged, with their corners 5 brought closer. Then, the four nuclear fuel storage racks A (A1 to A4) are arrayed and arranged in this way, and each of the engagement leg portions 32a of the engagement member 32 is inserted into and engaged with each engagement hole of a pair of upper and lower engagement receiving portions 31 on each of the nuclear fuel storage racks A from above (in the vertical direction T2). Thereby, the engagement member 32 engaged with the engagement receiving portion 31 is used to connect the mutually adjacent nuclear fuel storage racks (mutually-adjacent four nuclear fuel storage racks A (A1 to A4).

As described above, the nuclear fuel storage rack A is suspended so as to be arrayed and arranged, and also the engagement member 32 is inserted into the engagement hole from above, by which the mutually adjacent nuclear fuel storage racks A (A1 to A4) are connected. Therefore, as with the first and the second examples, the necessity for conventional troublesome work of joining a connecting plate by using pins is eliminated. Also, the engagement member 32 is only engaged with the engagement receiving portion 31 in the vertical direction T2, thus making it possible to simply and efficiently connect the nuclear fuel storage racks A (A1 to A4). Therefore, it is possible to suppress an equivalent absorbed radiation dose to an operator involved in work for connecting the nuclear fuel storage racks.

Further, the engagement member 32 is engaged with the engagement receiving portion 31 to connect the mutually adjacent nuclear fuel storage racks A (A1 to A4). Therefore, it is possible to prevent each of the nuclear fuel storage racks A (A1 to A4) stored inside the storage pit 2 from rocking and the nuclear fuel storage racks A (A1 to A4) from sliding due to their individual responses in the event of a large earthquake. Thus, there is no chance that the mutually adjacent nuclear fuel storage racks A (A1 to A4) will collide with each other inside the storage pit 2. Further, rocking of the nuclear fuel storage racks A (A1 to A4) is prevented to exclude any chance that the nuclear fuel storage racks A will collide against the side walls 2b of the storage pit 2.

Therefore, in the nuclear fuel storage rack connection structure 30 and the nuclear fuel storage rack connection method of the present example, it is possible to obtain the effects similar to those of the first and the second examples. Also, another nuclear fuel storage rack A is suspended so as to be arrayed and arranged beside a nuclear fuel storage rack A which has been stored in advance inside the storage pit 2 and also the engagement member 32 is inserted into and engaged with the engagement receiving portion 31 in the vertical direction T2, by which the mutually adjacent nuclear fuel storage racks A (A1 to A4) can be connected.

Thereby, it is possible to prevent each of the nuclear fuel storage racks A (A1 to A4) stored inside the storage pit 2 from rocking and the plurality of nuclear fuel storage racks A (A1 to A4) from sliding due to their individual responses in the event of a large earthquake. As a result, it is possible to reliably prevent collision of the mutually adjacent nuclear fuel storage racks A (A1 to A4) inside the storage pit 2. Further, collision of the nuclear fuel storage racks A (A1 to A4) against side walls and the bottom of the storage pit 2 can be reliably prevented by preventing rocking of the nuclear fuel storage racks A (A1 to A4).

Further, the necessity for the conventional troublesome work of joining a connecting plate by using pins is eliminated. The engagement member 32 is only engaged with the engagement receiving portion 31 in the vertical direction T2, by which the mutually adjacent nuclear fuel storage racks A (A1 to A4) can be connected. Thereby, the nuclear fuel storage racks A (A1 to A4) can be simply and efficiently connected to suppress an equivalent absorbed radiation dose to an operator involved in work for connecting the nuclear fuel storage racks.

Still further, one engagement member 32 is inserted into and engaged with each of the engagement receiving portions 31 of the nuclear fuel storage racks A (A1 to A4) from above, by which the four nuclear fuel storage racks A (A1 to A4) can be connected at once. If such a necessity arises, from a state in which the nuclear fuel storage racks A (A1 to A4) are kept connected, the engagement leg portion 32a of the engagement member 32 is pulled out from the engagement receiving portion 31, by which the mutually adjacent nuclear fuel storage racks A (A1 to A4) can be disconnected easily.

In addition, the engagement receiving portions 31 are installed at a plurality of stages in the vertical direction T2. Thereby, the mutually adjacent nuclear fuel storage racks A (A1 to A4) can be connected at a plurality of sites in the vertical direction T2. It is, thus, possible to connect the mutually adjacent nuclear fuel storage racks A (A1 to A4) more firmly.

A description has been so far given of the nuclear fuel storage rack connection structure and the nuclear fuel storage rack connection method of the third example, being part of the claimed invention. The present invention shall not be, however, limited to the above third example. The present invention may be modified, whenever necessary, in a scope not departing from the invention as defined in the claims.

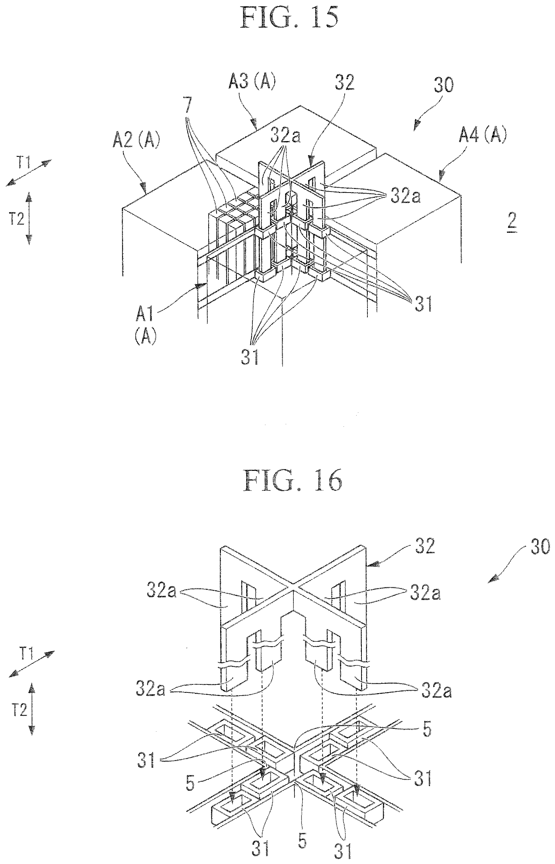

For example, the engagement member 32 is provided with the four engagement leg portions 32a. It is, however, not necessary to limit the number of the engagement leg portions 32a. For example, as shown in FIGS. 15, 16 and 18, it is acceptable that two engagement leg portions 32a are provided in each direction (four directions) of the cross-shaped engagement member 32 (a total of eight engagement leg portions) to form the engagement member 32. Then, in this instance, the engagement receiving portion 31 with which each of the engagement leg portions 32a is inserted and engaged from above is provided on each of the nuclear fuel storage racks A (A1 to A4) (the two engagement receiving portions 31 are installed at each stage of each of the nuclear fuel storage racks A (A1 to A2). Thereby, it is possible to connect the mutually adjacent nuclear fuel storage racks A (A1 to A4). Thus, the engagement member 32 having the engagement leg portions 32a which outnumber those of the present embodiment is formed, thus making it possible to connect the nuclear fuel storage racks A (A1 to A4) more firmly.

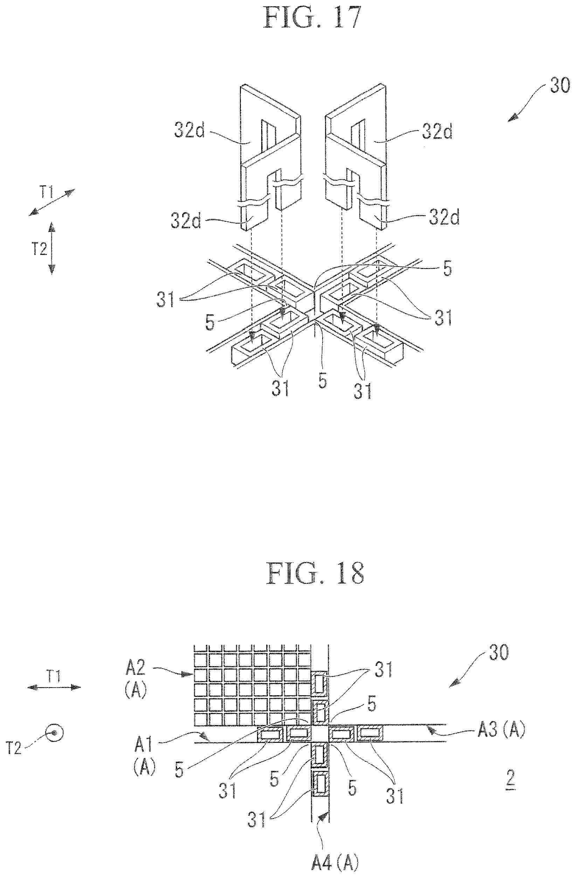

As shown in FIGS. 19 to 21, the engagement member 32 may be inserted into and engaged with the engagement receiving portion 31 at every stage. Accordingly, it is possible to connect the mutually adjacent nuclear fuel storage racks A (A1 to A4) more firmly. In this instance, as shown in FIGS. 19 and 21, a lower-stage engagement receiving portion 31 (31a) with which the engagement leg portion 32a of the lower-stage engagement member 32 (32b) is engaged is deviated outside with respect to the corners 5 which are brought closer to each other, as compared with an upper-stage engagement receiving portion 31 (31b) with which the engagement leg portion 32a of the upper-stage engagement member 32 (32c) is engaged. Thereby, the lower-stage engagement member 32 (32b) can be inserted and engaged in the vertical direction T2. Further, as shown in FIG. 17, the engagement member 32 given in FIG. 16 may be divided into four portions to give engagement members 32d.

When an operator takes measures to keep of radiation exposure, as shown in FIG. 22, the engagement receiving portion 31 and the engagement member 32 which has been engaged with the engagement receiving portion 31 (the engagement leg portion 32a inserted into and engaged with the engagement hole) may be fixed by using bolts 33 such as push bolts.

Any of the nuclear fuel storage rack connection structures 10, 20, 30 shown in the first to the third example may be appropriately selected and combined to connect the mutually adjacent nuclear fuel storage racks A.

### [Industrial Applicability]

The present invention relates to a nuclear fuel storage rack connection structure which connects a plurality of nuclear fuel storage racks stored so as to be arrayed and arranged underwater inside a storage pit, with nuclear fuel assemblies being accommodated. More particularly, the present invention relates to a nuclear fuel storage rack connection structure which is provided with an engagement receiving portion installed on an outer circumference of the nuclear fuel storage rack and having an engagement hole opened above or an engagement groove and in which an engagement member is inserted into and engaged with the engagement receiving portion in a vertical direction to connect the mutually adjacent nuclear fuel storage racks.

According to the present invention, it is possible to simply and efficiently connect the nuclear fuel storage racks which are stored underwater inside a storage pit.

### [Description of Reference Numerals]

- 1:: Conventional nuclear fuel storage rack
- 2:: Storage pit
- 2a:: Bottom (base plate)
- 2b:: Side wall
- 3:: Nuclear fuel storage facilities
- 4:: Base plate
- 4a:: Upper face
- 4b:: Lower face
- 5:: Corner
- 6:: Supporting leg portion
- 7:: Vertical cell (rack cell)
- 8:: Cell accommodating portion
- 8a:: Column
- 8b:: Cross member
- 8c:: Diagonal member (stay)
- 8d:: Outer circumferential plate
- 10:: Nuclear fuel storage rack connection structure
- 11:: Engagement receiving portion
- 11a:: Lock receiving portion
- 11b:: Taper receiving portion
- 12:: Engagement member
- 12a:: Lock portion
- 12b:: Taper portion
- 20:: Nuclear fuel storage rack connection structure
- 21:: Engagement receiving portion
- 21 a:: Side wall portion
- 22:: Engagement member
- 22a:: Side wall portion
- 30:: Nuclear fuel storage rack connection structure
- 31:: Engagement receiving portion
- 31a:: Lower-stage engagement receiving portion
- 31b:: Upper-stage engagement receiving portion
- 32:: Engagement member
- 32a:: Engagement leg portion
- 32b:: Lower-stage engagement member
- 32c:: Upper-stage engagement member
- 32d:: Engagement member
- 33:: Bolt
- A, A1, A2, A3, A4:: Nuclear fuel storage rack

## Claims

1. A nuclear fuel storage rack connection structure (30) for connecting a plurality of nuclear fuel storage racks (A, A1, A2, A3, A4), the nuclear fuel storage rack connection structure (30) comprising:
the plurality of nuclear fuel storage racks (A, A1, A2, A3, A4) which are stored so as to be arrayed underwater inside a storage pit (2), with nuclear fuel assemblies being accommodated in the nuclear fuel storage racks (A, A1, A2, A3, A4);
a plurality of engagement receiving portions (31) which are installed on an outer circumference of each of the plurality of nuclear fuel storage racks (A, A1, A2, A3, A4) and which have engagement holes penetrating from an upper face to a lower face of the engagement receiving portions (31) in a vertical direction; and
an engagement member (32) includes at least two engagement leg portions (32a) which engage with the engagement receiving portions (31), so as to connect the mutually adjacent nuclear fuel storage racks (A, A1, A2, A3, A4),
**characterized in that**
the engagement receiving portions (31) are installed at a plurality of stages in a vertical direction(T2) on the nuclear fuel storage rack (A, A1, A2, A3, A4) so as to be overlapped at the plurality of stages in the vertical direction,
the engagement leg portions (32a) extend vertically and the upper ends of which are integrally formed,
each of the at least two engagement leg portions (32a) is engaged with the engagement receiving portions (31) by the engagement leg portion (32a) being inserted into the engagement holes of the engagement receiving portions (31) that overlap in the vertical direction,
the engagement receiving portions (31) are multiple installed on each of the mutually adjacent nuclear fuel storage racks (A, A1, A2, A3, A4), and
one end of the engagement member (32) is engaged with the engagement receiving portion (31) of a first nuclear fuel storage rack of the plurality of nuclear fuel storage racks (A, A1, A2, A3, A4), while the other end of the engagement member (32) is engaged with the engagement receiving portion (31) of a second nuclear fuel storage rack of the plurality of nuclear fuel storage racks (A, A1, A2, A3, A4).

2. The nuclear fuel storage rack connection structure (30) according to Claim 1, wherein
the engagement member (32) is projected outside on the first nuclear fuel storage rack, with one end of the engagement member (32) fixed to an outer circumference of the first nuclear fuel storage rack of the mutually adjacent nuclear fuel storage racks (A, A1, A2, A3, A4).

3. The nuclear fuel storage rack connection structure (30) according to Claim 1 or 2, wherein
the engagement hole is provided with a lock receiving portion in which the width thereof gradually increases in the lateral direction of the nuclear fuel storage rack (A, A1, A2, A3, A4) from an outside toward an inside, and
the engagement member (32) is provided with a lock portion (12a) which is engaged with the lock receiving portion and locked.

4. The nuclear fuel storage rack connection structure (30) according to any one of Claims 1 to 3, wherein
the engagement hole is provided with a taper receiving portion in which the width thereof gradually decreases from above to below, and
the engagement member (32) is provided with a taper portion which is engaged with the taper receiving portion.

5. The nuclear fuel storage rack connection structure (30) according to any one of Claims 1 to 4, wherein
the plurality of nuclear fuel storage racks (A, A1, A2, A3, A4) are individually formed into a shape of a square box and arrayed so that the corners are brought close to each other,
each of the engagement leg portions (32a) is engaged with the engagement receiving portion (31) of each of the nuclear fuel storage racks (A, A1, A2, A3, A4) by inserting the engagement leg portions (32a) into the engagement receiving portion (31) of each of the nuclear fuel storage racks (A, A1, A2, A3, A4) arranged so that the corners are brought close to each other, so as to connect the mutually adjacent nuclear fuel storage racks (A, A1, A2, A3, A4) by way of the engagement member (32).

6. A method for connecting a plurality of nuclear fuel storage racks (A, A1, A2, A3, A4) which are stored so as to be arrayed underwater inside a storage pit (2), with nuclear fuel assemblies being accommodated,
the method for connecting nuclear fuel storage racks (A, A1, A2, A3, A4) in which the nuclear fuel storage rack connection structure (30) described in any one of Claims 1 to 5 is used as a structure for connecting a plurality of nuclear fuel storage racks (A, A1, A2, A3, A4), wherein
another nuclear fuel storage rack (A, A1, A2, A3, A4) is suspended so as to be arrayed and arranged beside a nuclear fuel storage rack (A, A1, A2, A3, A4) which has been stored in advance inside the storage pit (2), and
the engagement member (32) is engaged with the engagement receiving portions (31) by inserting the engagement member into the engagement receiving portions in the vertical direction so as to connect mutually adjacent nuclear fuel storage racks (A, A1, A2, A3, A4).

7. The nuclear fuel storage rack connection structure according to Claim 1, wherein
the engagement member (32) is formed in a cross shape and is provided with four engagement leg portions (32a),
each of the four engagement leg portions (32a) is provided at every end of the cross shaped engagement member (32).

8. The nuclear fuel storage rack connection structure according to Claim 1, wherein
the engagement member (32) is formed in a cross shape, and
two engagement leg portions (32a) are provided in each direction of the cross-shaped engagement member (32).

9. The nuclear fuel storage rack connection structure according to Claim 7 or 8, wherein
one engagement member (32) connects four nuclear fuel storage racks (A, A1, A2, A3, A4) that are mutually adjacent to each other.

10. The nuclear fuel storage rack connection structure according to Claim 1, wherein
the engagement receiving portions (31) are provided on the corner of the nuclear fuel storage rack (A, A1, A2, A3, A4).

## Patentansprüche

1. Kernbrennstoff-Lagergestell-Verbindungsstruktur (30) zum Verbinden einer Vielzahl von Kernbrennstoff-Lagergestellen (A, A1, A2, A3, A4), wobei die Kernbrennstoff-Lagergestell-Verbindungsstruktur (30) aufweist:
eine Vielzahl von Kernbrennstoff-Lagergestellen (A, A1, A2, A3, A4), welche so gelagert werden, dass sie Unterwasser in einer Lagergrube(2)aufgestellt sind, mit Kernbrennstoffelementen, die in den Kernbrennstoff-Lagergestellen (A, A1, A2, A3, A4) untergebracht sind;
eine Vielzahl von Eingriffsaufnahmeabschnitten (31), die an einem äußeren Umfang eines jeden der Vielzahl von Kernbrennstoff-Lagergestellen (A, A1, A2, A3, A4) angebracht sind und welche Eingriffslöcher, die von einer Oberseite zur Unterseite der Eingriffsaufnahmeabschnitte (31) in eine vertikale Richtung vordringen, aufweisen; und
ein Eingriffselement (32), das mindestens zwei Eingriffsschenkelabschnitte (32a) aufweist, welche mit den Eingriffsaufnahmeabschnitten (31) in Eingriff kommen, so dass die zueinander benachbarten Kernbrennstoff-Lagergestelle (A, A1, A2, A3, A4) verbunden sind,
**dadurch gekennzeichnet, dass**
die Eingriffsaufnahmeabschnitte (31) in einer Vielzahl von Stufen in einer vertikalen Richtung (T2) am Kernbrennstoff-Lagergestell (A, A1, A2, A3, A4) angebracht sind, so dass sie sich bei der Vielzahl von Stufen in einer vertikalen Richtung überlappen,
die Eingriffsschenkelabschnitte (32a) sich vertikal erstrecken und deren obere Enden integral ausgebildet sind,
jeder der mindestens zwei Eingriffsschenkelabschnitte (32a) mit dem Eingriffsaufnahmeabschnitt (31) durch ein Einfügen der Eingriffsschenkelabschnitte (32a) in die Eingriffslöcher der Eingriffsaufnahmeabschnitte (31), welche in einer vertikalen Richtung überlappen, in Eingriff sind,
die Eingriffsaufnahmeabschnitte (31) mehrfach auf jedem der einander benachbarten Kernbrennstoff-Lagergestelle (A, A1, A2, A3, A4) angebracht sind, und
ein Ende des Eingriffselements (32) mit dem Eingriffsaufnahmeabschnitte (31) eines ersten Kernbrennstoff-Lagergestells aus der Vielzahl von Kernbrennstoff-Lagergestellen (A, A1, A2, A3, A4) im Eingriff ist, während das andere Ende des Eingriffselements (32) mit einem zweiten Eingriffsaufnahmeabschnitte (31) eines zweiten Kernbrennstoff-Lagergestells aus der Vielzahl von Kernbrennstoff-Lagergestellen (A, A1, A2, A3, A4) in Eingriff ist.

2. Kernbrennstoff-Lagergestell-Verbindungsstruktur (30) nach Anspruch 1, wobei
das Eingriffselement (32) außerhalb des ersten Kernbrennstoff-Lagergestells vorsteht, wobei ein Ende des Eingriffselements (32) am Außenumfang des ersten Kernbrennstoff-Lagergestells der einander benachbarten Kernbrennstoff-Lagergestelle (A, A1, A2, A3, A4)befestigt ist.

3. Kernbrennstoff-Lagergestell-Verbindungsstruktur (30) nach Anspruch 1 oder 2, wobei
das Eingriffsloch mit einem Verriegelungsaufnahmeabschnitt versehen ist, dessen Breite sich allmählich in die Lateralrichtung des Kernbrennstoff-Lagergestells (A, A1, A2, A3, A4) von außen nach innen erhöht, und
das Eingriffselement (32) mit einem
Verriegelungsabschnitt (12a), welcher mit dem Verriegelungsaufnahmeabschnitt in Eingriff und verriegelt ist, versehen ist.

4. Kernbrennstoff-Lagergestell-Verbindungsstruktur (30) nach einem der Ansprüche 1 bis 3, wobei
das Eingriffsloch mit einem Kegel-Aufnahmeabschnitt versehen ist, in welchem die Breite davon schrittweise von oben nach unten abnimmt, und
das Eingriffselement (32) mit einem konischen Abschnitt, welcher mit dem Kegel-Aufnahmeabschnitt in Eingriff ist, versehen ist.

5. Kernbrennstoff-Lagergestell-Verbindungsstruktur (30) nach einem der Ansprüche 1 bis 4, wobei
die Vielzahl von Kernbrennstoff-Lagergestellen (A, A1, A2, A3, A4) einzeln in die Form einer quadratischen Kiste ausgebildet und angeordnet sind, so dass die Ecken nahe aneinander gebracht werden,
jeder der Eingriffsschenkelabschnitte (32a) in Eingriff ist mit dem Eingriffsaufnahmeabschnitte (31) des jeweiligen Kernbrennstoff-Lagergestells (A, A1, A2, A3, A4) durch Einfügen der Eingriffsschenkelabschnitte (32a) in die Eingriffsaufnahmeabschnitte (31) eines jeden Kernbrennstoff-Lagergestells (A, A1, A2, A3, A4), die so angeordnet sind, dass die Ecken nahe aneinander gebracht werden, so dass die nebeneinanderliegenden Kernbrennstoff-Lagergestelle (A, A1, A2, A3, A4) über das Eingriffselement (32) verbunden werden.

6. Verfahren zum Verbinden einer Vielzahl von Kernbrennstoff-Lagergestellen (A, A1, A2, A3, A4), welche so gelagert werden, dass sie Unterwasser in einer Lagergrube(2) mit untergebrachten Kernbrennstoffelementen, aufgestellt werden,
die Methode zum Verbinden von Kernbrennstoff-Lagergestellen (A, A1, A2, A3, A4) in welcher die, in einem der Ansprüche 1 bis 5 beschriebene, Kernbrennstoff-Lagergestell-Verbindungsstruktur (30) als eine Struktur zum Verbinden einer Vielzahl von Kernbrennstoff-Lagergestellen (A, A1, A2, A3, A4) verwendet wird, wobei
ein weiteres Kernbrennstoff-Lagergestell (A, A1, A2, A3, A4) aufgehoben wird um angeordnet und neben einem Kernbrennstoff-Lagergestell (A, A1, A2, A3, A4) arrangiert zu werden, welches im Vorhinein in der Lagergrube (2) gelagert wurde, und
das Eingriffselement (32) besetzt ist mit dem Eingriffsaufnahmeabschnitt (31) durch Einführen des Eingriffselements in die Eingriffsaufnahmeabschnitte (31) in einer vertikalen Richtung, so dass nebeneinanderliegende Kernbrennstoff-Lagergestelle (A, A1, A2, A3, A4) verbunden werden.

7. Kernbrennstoff-Lagergestell-Verbindungsstruktur nach Anspruch 1, wobei
das Eingriffselement (32) kreuzförmig ausgebildet und mit vier Eingriffsschenkelabschnitte (32a) versehen ist,
jeder der vier Eingriffsschenkelabschnitte (32a) an jedem Ende des kreuzförmigen Eingriffselements (32) vorgesehen ist.

8. Kernbrennstoff-Lagergestell-Verbindungsstruktur nach Anspruch 1, wobei
das Eingriffselement (32) kreuzförmig ausgebildet ist, und
zwei Eingriffsschenkelabschnitte (32a) in jeder Richtung des kreuzförmigen Eingriffselements (32) vorgesehen sind.

9. Kernbrennstoff-Lagergestell-Verbindungsstruktur nach Anspruch 7 oder 8, wobei
ein Eingriffselement (32) vier Kernbrennstoff-Lagergestelle (A, A1, A2, A3, A4) verbindet, welche einander benachbart angeordnet sind.

10. Kernbrennstoff-Lagergestell-Verbindungsstruktur nach Anspruch 1, wobei
die Eingriffsaufnahmeabschnitte (31) an den Ecken des Kernbrennstoff-Lagergestells (A, A1, A2, A3, A4) vorgesehen sind.

## Revendications

1. Structure de liaison de casiers de stockage de combustible nucléaire (30) pour la liaison d'une pluralité de casiers de stockage de combustible nucléaire (A, A1, A2, A3, A4), la structure de liaison de casiers de stockage de combustible nucléaire (30) comprenant :
la pluralité de casiers de stockage de combustible nucléaire (A, A1, A2, A3, A4) qui sont stockés de façon à être disposés sous l'eau à l'intérieur d'un puits de stockage (2), avec des ensembles de combustible nucléaire logés dans les casiers de stockage de combustible nucléaire (A, A1, A2, A3, A4) ;
une pluralité de portions de réception de mise en prise (31) qui sont installées sur une circonférence extérieure de chacun de la pluralité de casiers de stockage de combustible nucléaire (A, A1, A2, A3, A4) et qui ont des trous de mise en prise pénétrant d'une face supérieure à une face inférieure des portions de réception de mise en prise (31) dans une direction verticale ; et
un élément de mise en prise (32) comprend au moins deux portions de jambe de mise en prise (32a) qui entrent en prise avec les portions de réception de mise en prise (31), de façon à relier les casiers de stockage de combustible nucléaire (A, A1, A2, A3, A4) mutuellement adjacents,
**caractérisée en ce que**
les portions de réception de mise en prise (31) sont installées à une pluralité d'étages dans une direction verticale (T2) sur le casier de stockage de combustible nucléaire (A, A1, A2, A3, A4) de façon à être en chevauchement à la pluralité d'étages dans la direction verticale,
les portions de jambe de mise en prise (32a) s'étendent verticalement et les extrémités supérieures de celles-ci sont formées d'un seul tenant,
chacune des au moins deux portions de jambe de mise en prise (32a) est mise en prise avec les portions de réception de mise en prise (31) par la portion de jambe de mise en prise (32a) insérée dans les trous de mise en prise des portions de réception de mise en prise (31) qui sont en chevauchement dans la direction verticale,
les portions de réception de mise en prise (31) sont installées à plusieurs sur chacun des casiers de stockage de combustible nucléaire (A, A1, A2, A3, A4) mutuellement adjacents, et
une extrémité de l'élément de mise en prise (32) est mise en prise avec la portion de réception de mise en prise (31) d'un premier casier de stockage de combustible nucléaire de la pluralité de casiers de stockage de combustible nucléaire (A, A1, A2, A3, A4), pendant que l'autre extrémité de l'élément de mise en prise (32) est mise en prise avec la portion de réception de mise en prise (31) d'un deuxième casier de stockage de combustible nucléaire de la pluralité de casiers de stockage de combustible nucléaire (A, A1, A2, A3, A4).

2. Structure de liaison de casiers de stockage de combustible nucléaire (30) selon la revendication 1, dans laquelle
l'élément de mise en prise (32) fait saillie à l'extérieur sur le premier casier de stockage de combustible nucléaire, avec une extrémité de l'élément de mise en prise (32) fixée à une circonférence extérieure du premier casier de stockage de combustible nucléaire des casiers de stockage de combustible nucléaire (A, A1, A2, A3, A4) mutuellement adjacents.

3. Structure de liaison de casiers de stockage de combustible nucléaire (30) selon la revendication 1 ou 2, dans laquelle
le trou de mise en prise est doté d'une portion de réception de blocage dans laquelle sa largeur augmente progressivement dans la direction latérale du casier de stockage de combustible nucléaire (A, A1, A2, A3, A4) d'un extérieur vers un intérieur, et
l'élément de mise en prise (32) est doté d'une portion de blocage (12a) qui est mise en prise avec la portion de réception de blocage, et bloquée.

4. Structure de liaison de casiers de stockage de combustible nucléaire (30) selon l'une quelconque des revendications 1 à 3, dans laquelle
le trou de mise en prise est doté d'une portion de réception conique dans laquelle sa largeur diminue progressivement du haut vers le bas, et
l'élément de mise en prise (32) est doté d'une portion conique qui est mise en prise avec la portion de réception conique.

5. Structure de liaison de casiers de stockage de combustible nucléaire (30) selon l'une quelconque des revendications 1 à 4, dans laquelle
la pluralité de casiers de stockage de combustible nucléaire (A, A1, A2, A3, A4) sont réalisés individuellement en une forme de boîte carrée et disposés de façon à ce que les coins soient amenés à proximité les uns des autres,
chacune des portions de jambe de mise en prise (32a) est mise en prise avec la portion de réception de mise en prise (31) de chacun des casiers de stockage de combustible nucléaire (A, A1, A2, A3, A4) par insertion des portions de jambe de mise en prise (32a) dans la portion de réception de mise en prise (31) de chacun des casiers de stockage de combustible nucléaire (A, A1, A2, A3, A4) agencés de façon à ce que les coins soient amenés à proximité les uns des autres, de façon à relier les casiers de stockage de combustible nucléaire (A, A1, A2, A3, A4) mutuellement adjacents via l'élément de mise en prise (32).

6. Procédé de liaison d'une pluralité de casiers de stockage de combustible nucléaire (A, A1, A2, A3, A4) qui sont stockés de façon à être disposés sous l'eau à l'intérieur d'un puits de stockage (2), avec des ensembles de combustible nucléaire logés,
le procédé de liaison de casiers de stockage de combustible nucléaire (A, A1, A2, A3, A4) dans lequel la structure de liaison de casiers de stockage de combustible nucléaire (30) décrite dans l'une quelconque des revendications 1 à 5 est utilisée comme structure pour la liaison d'une pluralité de casiers de stockage de combustible nucléaire (A, A1, A2, A3, A4), dans lequel
un autre casier de stockage de combustible nucléaire (A, A1, A2, A3, A4) est suspendu de façon à être disposé et agencé à côté d'un casier de stockage de combustible nucléaire (A, A1, A2, A3, A4) qui a été stocké à l'avance à l'intérieur du puits de stockage (2), et
l'élément de mise en prise (32) est mis en prise avec les portions de réception de mise en prise (31) par insertion de l'élément de mise en prise dans les portions de réception de mise en prise dans la direction verticale de façon à relier des casiers de stockage de combustible nucléaire (A, A1, A2, A3, A4) mutuellement adjacents.

7. Structure de liaison de casiers de stockage de combustible nucléaire selon la revendication 1, dans laquelle
l'élément de mise en prise (32) est réalisé en forme de croix et est doté de quatre portions de jambe de mise en prise (32a),
chacune des quatre portions de jambe de mise en prise (32a) est fournie à chaque extrémité de l'élément de mise en prise cruciforme (32).

8. Structure de liaison de casiers de stockage de combustible nucléaire selon la revendication 1, dans laquelle
l'élément de mise en prise (32) est réalisé en forme de croix, et
deux portions de jambe de mise en prise (32a) sont fournies dans chaque direction de l'élément de mise en prise cruciforme (32).

9. Structure de liaison de casiers de stockage de combustible nucléaire selon la revendication 7 ou 8, dans laquelle
un élément de mise en prise (32) relie quatre casiers de stockage de combustible nucléaire (A, A1, A2, A3, A4) qui sont mutuellement adjacents les uns aux autres.

10. Structure de liaison de casiers de stockage de combustible nucléaire selon la revendication 1, dans laquelle
les portions de réception de mise en prise (31) sont fournies sur le coin du casier de stockage de combustible nucléaire (A, A1, A2, A3, A4).
